# EUROPÄISCHE PATENTANMELDUNG

(11) **EP 3 950 800 A1**
(43) Veröffentlichungstag der Anmeldung: **09.02.2022**
(21) Anmeldenummer: 20189086.0
(22) Anmeldetag: 03.08.2020
(51) Int. Cl.: C08K 3/011, C08K 3/013, C08K 3/06, C08K 3/32, C08K 5/00, C08K 5/14, C09J 7/35, C09J 109/00

(54) **VERBESSERTE KORROSIONSBESTÄNDIGKEIT IN KAUTSCHUK-BASIERTEN KLEB- UND DICHTSTOFFEN**

(71) Anmelder: Henkel AG & Co. KGaA, 40589 Düsseldorf (DE)
(72) Erfinder: KLOTZ, Michael, 68353 Edingen-Neckarhausen (DE); GEROLD, Verena, 69168 Wiesloch (DE); NOWICKI, Slawomir, 69251 Gaiberg (DE); SAUER, Ralf, 68789 St. Leon-Rot (DE)
(74) Vertreter: Viering, Jentschura & Partner mbB Patent- und Rechtsanwälte

(57) **Zusammenfassung**

Die vorliegende Erfindung betrifft eine heißhärtende reaktive Zusammensetzung auf der Basis von natürlichen und/oder synthetischen, olefinische Doppelbindungen enthaltenden Elastomeren und enthaltend des Weiteren mindestens ein Vulkanisationssystem, sowie deren Verwendung als einkomponentiger Klebstoff, Dichtstoff, als Versiegelungsmasse oder Beschichtungsmasse im Fahrzeugbau, insbesondere im Automobilrohbau. Die vorliegende Erfindung betrifft darüber hinaus die Verwendung von Korrosionsschutzpigmenten zur Verbesserung des Korrosionsschutzes derartiger Zusammensetzungen.

## Beschreibung

Die vorliegende Erfindung betrifft eine heißhärtende reaktive Zusammensetzung auf der Basis von natürlichen und/oder synthetischen, olefinische Doppelbindungen enthaltenden Elastomeren und enthaltend des Weiteren mindestens ein Vulkanisationssystem, sowie deren Verwendung als einkomponentiger Klebstoff, Dichtstoff, als Versiegelungsmasse oder Beschichtungsmasse im Fahrzeugbau, insbesondere im Automobilrohbau. Die vorliegende Erfindung betrifft darüber hinaus die Verwendung von Korrosionsschutzpigmenten zur Verbesserung des Korrosionsschutzes derartiger Zusammensetzungen.

Im Maschinen-, Fahrzeug- oder Gerätebau, insbesondere im Flugzeugbau, Schienenfahrzeugbau oder Kraftfahrzeugbau werden die Bauteile aus den verschiedenen metallischen Komponenten und/oder Verbundwerkstoffen in zunehmendem Masse mit Hilfe von Klebstoffen gefügt. Für strukturelle Klebungen werden dabei hohe Anforderungen an die Festigkeit des Klebeverbundes gestellt. Hochfeste und gleichzeitig schlagzähe, schälfeste und schlagschälfeste Klebstoffe, die heute für die Anwendung im Automobilrohbau eingesetzt werden, sind bisher hauptsächlich auf Basis von Epoxiden und Elastomer-modifizierten Epoxiden bzw. Acrylaten bekannt.

Dabei werden diese heißhärtenden, reaktiven Klebstoffe (oft auch als Heißschmelzklebstoffe formuliert) für Bördelnahtverklebungen bzw. überlappende Klebungen im Rohbau auf beöltes Blech aufgetragen und gefügt. Die Aushärtung der hierbei eingesetzten Klebstoffe oder Dichtstoffe erfolgt später in den Lacktrockenöfen. Vorher durchlaufen die geklebten bzw. abgedichteten oder versiegelten Teile Reinigungs-, Phosphatier- und Tauchgrundierungsstufen. Durch die in diesen Stufen verwendeten Behandlungsmittel können die Kleb- bzw. Dicht- oder Versiegelungsmittel aus den Klebefugen gespült werden. Um dieses zu verhindern, wird das Kleb-, Dicht- oder Versiegelungsmittel mittels Vorhärtungsmechanismen wie zum Beispiel mit Induktionsheizungen, Rohbauöfen, Infrarot-Strahlern vorgehärtet oder rheologisch entsprechend eingestellt, um die nachfolgende Vorbehandlung zu überstehen ohne ausgewaschen zu werden. Zusätzlich können Schweißpunkte zur Versteifung der Karosserieteile gesetzt werden. Die Aushärtung der Klebstoffe erfolgt beim Durchlaufen der anschließenden Lacköfen (für den Kathodischen Tauchlack (KTL), Füller, Decklack, etc.). Generell finden Zusammensetzungen auf Basis von Epoxidharzen, Acrylharzen und Ethylen-Vinylacetat-Copolymeren (EVA) Anwendung. Um hohen Rohstoffkosten, notwendigen arbeitshygienischen Kennzeichnungen (meistens mit Xi), bedingter Ölaufnahme, mangelnder Alterungsbeständigkeit sowie mangelndem Korrosionsschutz zu begegnen, wird vermehrt auf Kleb- und Dichtstoffzusammensetzungen auf Basis von natürlichem und/oder synthetischen (Flüssig)Kautschuk gesetzt.

Gleichzeitig steigen die Anforderungen der Automobilindustrie an die Korrosionsbeständigkeit der jeweiligen Kleb- oder Dichtstoffe stetig. Mittlerweile sind im Automobilrohbaubereich Beständigkeiten der Klebstoffe von bis zu 3000 h Salzsprühtest (DIN EN ISO 9227) oder 20 Wochen VDA 621-415 Klimawechseltest oder mehr gefordert. Aktuelle Systeme erfüllen meist nur bis zu 12 Wochen VDA 621-415 Klimawechseltest (auch speziell für Aluminium SCAB Korrosionszyklus 40 Runden), wobei versucht wird, die Korrosionsbeständigkeit über Modifikationen der jeweiligen Polymermatrix selbst zu verbessern.

Aktuelle Anwendungen sind auf Substrate wie kaltgewalzten Stahl oder zinkgalvanisierte (hot dip oder electrolytic galvanized) optimiert, allerdings steigt die Vielfalt der Werkstoffe im Automobilen Rohbau rapide an. Aluminium mit und ohne TiZr-Behandlung und auch Zink-Magnesium-Stähle kommen immer mehr zu Anwendung. Auf diesem breiten Spektrum Haftung und entsprechende Korrosionsbeständigkeit aufzubauen, stellt eine ganz neue Herausforderung dar.

Die der vorliegenden Erfindung zugrundeliegende Aufgabe bestand folglich darin, heißhärtende Klebstoffzusammensetzungen auf Kautschukbasis bereitzustellen, die sich durch einen verbesserten Korrosionsschutz auszeichnen.

Die erfindungsgemäße Lösung dieser Aufgabe besteht, in einem ersten Aspekt, in der Bereitstellung einer heißhärtenden, reaktiven Zusammensetzung auf der Basis von natürlichen und/oder synthetischen, olefinische Doppelbindungen enthaltenden Elastomeren und enthaltend des Weiteren mindestens ein Vulkanisationssystem, dadurch gekennzeichnet, dass sie mindestens ein Korrosionsschutzpigment umfasst.

In einem weiteren Aspekt betrifft die vorliegende Erfindung auch die Verwendung einer heißhärtenden, reaktiven Zusammensetzung, wie hierin beschrieben, als einkomponentiger Klebstoff, Dichtstoff oder Beschichtungsmasse im Automobilrohbau.

In einem weiteren Aspekt betrifft die vorliegende Erfindung weiterhin die Verwendung mindestens eines Korrosionsschutzpigmentes, wie hierin definiert, zur Verbesserung des Korrosionsschutzes einer heißhärtenden, reaktiven Zusammensetzung auf der Basis von natürlichen und/oder synthetischen, olefinische Doppelbindungen enthaltenden Elastomeren und enthaltend des Weiteren mindestens ein Vulkanisationssystem.

Diese und weitere Ausführungsformen, Merkmale und Vorteile der Erfindung werden für den Fachmann aus dem Studium der folgenden detaillierten Beschreibung und Ansprüche ersichtlich. Dabei können einzelne beschriebene Merkmale oder Ausführungsformen der Erfindung mit anderen Merkmalen oder Ausführungsformen der Erfindung kombiniert werden ohne dass diese im Rahmen der Erfindung in Kombination beschrieben wurden. Es ist selbstverständlich, dass die hierin enthaltenen Beispiele die Erfindung beschreiben und veranschaulichen sollen, diese aber nicht einschränken und insbesondere die Erfindung nicht auf die Beispiele beschränkt ist.

"Mindestens ein", wie hierin verwendet, bezieht sich auf 1 oder mehr, beispielsweise 2, 3, 4, 5, 6, 7, 8, 9 oder mehr. Im Zusammenhang mit den hierin genannten Korrosionsschutzpigmenten bezieht sich diese Angabe nicht auf die absolute Menge an Molekülen, sondern auf die Art der Verbindung. "Mindestens ein Korrosionsschutzpigment" bedeutet daher beispielsweise, dass nur eine Art von Korrosionsschutzpigment oder mehrere verschiedene Arten von Korrosionsschutzpigmenten, ohne Angaben über die Menge der einzelnen Verbindungen zu machen, enthalten sein können.

Alle im Zusammenhang mit dem hierin beschriebenen Verfahren angegeben Mengenangaben beziehen sich, sofern nichts anderes angegeben ist, auf Gew.-% jeweils bezogen auf das Gesamtgewicht der Zusammensetzung. Des Weiteren beziehen sich derartige Mengenangaben, die sich auf mindestens einen Bestandteil beziehen, immer auf die Gesamtmenge dieser Art von Bestandteil, der in der Zusammensetzung enthalten ist, sofern nicht explizit etwas anderes angegeben ist. Das heißt, dass sich derartige Mengenangaben, beispielsweise im Zusammenhang mit "mindestens einem Korrosionsschutzpigment", auf die Gesamtmenge von Korrosionsschutzpigmenten, welche in der Zusammensetzung enthalten sind, bezieht, wenn nicht explizit etwas anderes angegeben ist.

Zahlenwerte, die hierin ohne Dezimalstellen angegeben sind, beziehen sich jeweils auf den vollen angegebenen Wert mit einer Dezimalstelle. So steht beispielsweise "99 %" für "99,0 %".

Numerische Bereiche, die in dem Format "in/von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

"Ungefähr", wie hierin in Bezug auf Zahlenwerte verwendet, bedeutet den entsprechenden Wert ±10%, vorzugsweise ±5%.

Wenn hierin auf Molmassen Bezug genommen wird, beziehen sich diese Angaben immer auf die zahlenmittlere Molmasse Mₙ, sofern nicht explizit anders angeben. Das Zahlenmittel der Molmasse kann beispielsweise mittels Gel-Permeations-Chromatographie (GPC) gemäß DIN 55672-1:2007-08 mit THF als Eluent bestimmt werden. Die massenmittlere Molmasse M_{w} kann ebenfalls mittels GPC bestimmt werden, wie für Mₙ beschrieben.

Unter "flüssig" wird hier "flüssig bei Raumtemperatur (22 °C)" verstanden. Insbesondere ist das Merkmal flüssig so zu verstehen, dass das jeweilige Produkt unter dem Einfluss der Schwerkraft aus einem Behälter ausgegossen werden kann.

Die erfindungsgemäßen heißhärtenden, reaktiven Zusammensetzungen basieren auf natürlichen und/oder synthetischen olefinische Doppelbindungen enthaltenden Elastomeren und enthaltend des Weiteren mindestens ein Vulkanisationssystem.

Natürliche oder synthetische Elastomere enthaltend olefinische Doppelbindungen sind allgemein bekannt. Derartige Polyene enthalten dabei pro Molekül mindestens eine olefinisch ungesättigte Doppelbindung. Sie können dabei aus der folgenden Gruppe der Homo- und/oder Copolymeren ausgewählt werden:
Polybutadiene, insbesondere die 1,3- und 1,2-Polybutadiene, Polybutene, Polyisobutylene, 1,4- und 3,4-Polyisoprene, Styrol-Butadien-Copolymere, Butadien-Acrylnitril-Copolymere, wobei eines oder mehrere dieser Polymeren endständige und/oder (statistisch verteilte) seitenständige funktionelle Gruppen haben können. Beispiele für derartige funktionelle Gruppen sind Hydroxy-, Amino-, Carboxyl-, Carbonsäureanhydridoder Epoxygruppen. In verschiedenen Ausführungsformen enthält eine erfindungsgemäße Zusammensetzung mindestens ein flüssiges Polyen ausgewählt aus der Gruppe bestehend aus Polybutadienen, Polybutenen, Polyisobutylenen, 1,4- und 3,4-Polyisoprenen, Styrol-Butadien-Copolymeren und Butadien-Acrylnitril-Copolymeren, vorzugsweise cis-1,4-Polybutadien.

Das Molekulargewicht dieser Flüssigkautschuke ist typischerweise unterhalb von 80 000 und oberhalb von 400, vorzugsweise zwischen 800 und 25 000. Der Anteil an Flüssigkautschuk an der Gesamtzusammensetzung hängt dabei von der gewünschten Rheologie der ungehärteten Zusammensetzung und der erwünschten mechanischen Steifigkeit oder Festigkeit des Verbundes und gegebenenfalls den akustischen Dämpfungseigenschaften der ausgehärteten Zusammensetzung ab. Der Anteil an flüssigem Kautschuk bzw. Elastomer variiert normalerweise zwischen 2 und 55 Gew.-% der Gesamtformulierung. Dabei hat es sich als zweckmäßig erwiesen, vorzugsweise Mischungen von Flüssigkautschuken unterschiedlicher Molekulargewichte und unterschiedlicher Konfiguration in Bezug auf die restlichen Doppelbindungen einzusetzen. Außerdem können als Copolymere sowohl Blockcopolymere als auch solche mit statistischer Verteilung der Comonomeren eingesetzt werden.

Zur Erzielung optimaler Haftung auf den diversen Substraten wird in den besonders bevorzugten Formulierungen anteilig eine Flüssigkautschukkomponente mit Hydroxylgruppen, Carboxylgruppen bzw. Säureanhydridgruppen eingesetzt. Der Anteil an carboxylgruppenhaltigem Flüssigkautschuk kann 0 bis 25 Gew.-%, vorzugsweise 1 bis 15 und ganz besonders bevorzugt 3 bis 10 Gew.-% betragen.

Als weiteren Bestandteil können erfindungsgemäße Zusammensetzungen flüssige Polybutadiene enthalten, vorzugsweise mit enger Molekulargewichtsverteilung, welche durch anionische Polymerisation herstellbar sind. Diese niedermolekularen flüssigen Polybutadiene enthalten in der Polymerkette drei Strukturtypen: vinylische 1,2-Doppelbindungen, cis 1,4-Doppelbindungen und trans 1 ,4- Doppelbindungen, wobei diese flüssigen Polymeren vorzugsweise bis zu 80 %, vorzugsweise weniger als 80 % vinylische 1,2- Doppelbindungen, 20 bis 60 % trans 1 ,4-Doppelbindungen und 10 bis 35 % cis 1,4-Doppelbindungen in ihrer Mikrostruktur aufweisen.

Die Molekulargewichte dieser flüssigen Butadiene liegen zwischen 2.000 und 12.000, vorzugsweise zwischen 5.000 und 9.000 (zahlenmittleres Molekulargewicht). Aufgrund ihrer engen Molekulargewichtsverteilung weisen sie eine sehr niedrige Viskosität zwischen 3 und 15 Pa s bei 25 °C auf. Sie können gegebenenfalls, bedingt durch die anionische Polymerisation, eine oder zwei terminale bzw. eine oder mehrere statistisch verteilte Hydroxylgruppe(n) pro Molekül aufweisen. Alternativ können diese Polymere auch eine oder zwei terminale bzw. eine oder mehrere statistisch verteilte Carboxylgruppe(n) aufweisen. Der Vorteil des Einsatzes dieser flüssigen Polybutadiene mit enger Molekulargewichtsverteilung ist ein höheres Molekulargewicht im Vergleich zu üblichen flüssigen Polybutadienen bei trotzdem niedriger Viskosität.

Zusätzlich kann die erfindungsgemäße Zusammensetzung auch noch einen Anteil an Festkautschuken enthalten. Geeignete Festkautschuke haben im Vergleich zu den Flüssigkautschuken ein signifikant höheres Molekulargewicht (MW=100000 oder höher). Beispiele für geeignete Kautschuke sind Polybutadien, vorzugsweise mit einem sehr hohen Anteil an cis-1,4-Doppelbindungen (typischerweise über 95%), Styrol-Butadien-Kautschuk, Butadien-Acrylnitril-Kautschuk, synthetischer oder natürlicher Isoprenkautschuk, Polycyclooctenamer, Butylkautschuk oder Polyurethankautschuk. Der Anteil an Festkautschuk kann dabei bis zu 15 Gew.-% betragen, vorzugsweise liegt er zwischen 0 und 12 Gew.-% und ganz besonders bevorzugt zwischen 0 und 9 Gew.-%.

In verschiedenen Ausführungsformen umfasst eine erfindungsgemäße Zusammensetzung mindestens einen Festkautschuk aus der Gruppe cis-1,4-Polybutadien, Styrol-Butadien-Kautschuk, synthetischer Isoprenkautschuk, Naturkautschuk, Ethylen-Propylen-Dien-Kautschuk (EPDM), Polycyclooctenamer, Nitrilkautschuk, Butylkautschuk, Acrylkautschuk oder Polychloropren.

Das Vulkanisationssystem kann aus den für die Vulkanisation von Kautschuk bekannten Vulkanisationssystemen ausgewählt werden. So kann es gemäß der Alternative
b1) Schwefel und einen oder mehrere Beschleuniger enthalten.

Der pulverförmige Schwefel wird dabei bevorzugt in Mengen von 0,5 bis 6,5 Gew.-%, bezogen auf die Gesamtzusammensetzung eingesetzt. Besonders bevorzugt werden Mengen zwischen 1 und 4 Gew.-% eingesetzt. Als organische Beschleuniger eignen sich Dithiocarbamate (in Form ihrer Ammonium- bzw. Metallsalze), Xanthogenate, Thiuram-Verbindungen (Monosulfide und Disulfide), Thiazolverbindungen, Aldehyd/Aminbeschleuniger (z.B. Hexamethylentetramin) sowie Guanidinbeschleuniger. Ganz besonders bevorzugt werden Dibenzothiazyldisulfid (MBTS), 2-Mercaptobenzthiazol (MBT), dessen Zinksalz (ZMBT), Zinkdibenzyldithiocarbamat (ZBEC), N-Cyclohexylbenzodithiazylsulfenamid (CBS) oder Diphenylguanidin. Die Beschleuniger, inklusive der vorstehend und im folgenden Absatz genannten weiteren Zinkverbindungen, werden vorzugsweise in Mengen zwischen 0,25 und 20 Gew.-%, besonders bevorzugt zwischen 0,8 und 12 Gew.-%, verwendet. Für die Erzielung besonders hoher Temperatur- und Reversionsfestigkeit des Klebstoffes kann das Vulkanisationsgemisch auch bifunktionelle Vernetzer enthalten. Konkrete Beispiele sind Vernetzer auf Basis von bifunktionellen Dithiocarbamaten wie z.B. das 1,6-bis(N,N-Dibenzylthiocarbamoyldithio)-hexan. Derartige Vernetzer können in Mengen zwischen 0 und 2, vorzugsweise zwischen 0 und 1 Gew.-% in den Zusammensetzungen enthalten sein.

Bei den als Beschleuniger wirkenden Zinkverbindungen kann zwischen den Zinksalzen von Fettsäuren, Zinkdithiocarbamaten, basischen Zinkcarbonaten sowie insbesondere feinteiligem Zinkoxid gewählt werden. Der Gehalt an Zinkverbindungen liegt im Bereich zwischen 0,5 und 10 Gew.-%, vorzugsweise zwischen 2 und 8 Gew.-%. Diese Zinkverbindungen können in Kombination mit den im vorstehenden Absatz genannten Beschleunigern eingesetzt werden und werden dies vorzugsweise auch. Zusätzlich können weitere typische Kautschuk-Vulkanisationshilfsmittel wie Fettsäuren (z.B. Stearinsäure) in der Formulierung vorhanden sein.

Das Vulkanisationssystem kann aber auch frei von elementarem Schwefel sein. Beispielsweise können als Vulkanisationssystem
b2) Peroxide, vorzugsweise organische Peroxide eingesetzt werden, wie sie für diesen Zweck bekannt sind. Nicht-einschränkende Beispiele geeigneter Verbindungen sind: Dibenzoylperoxid, tert-Butylperoxybenzoat, und insbesondere 1,1-Di-(tert-butylperoxy)-3,3,5-trimethylcyclohexan, Butyl-4,4-di-(tert-butylperoxy)valerat, Dicumylperoxid, Di-(2-tert.-butyl-peroxyisopropyl)-benzen, tert-Butylcumylperoxid, 2,5-Dimethyl-2,5-di-(tert-butylperoxy)-hexan, Di-tert-butylperoxid, 3,3,5,7,7,-Pentamethyl-1,2,4,trioxepan, tert-Butylperoxy-2-ethylhexylcarbonat, Di(4-methylbenzoyl)peroxid, Di(2,4-dichlorobenzoyl)peroxid, 2,5-Dimethyl-2,5-di(tert-butylperoxyl)hexan und Di-tert-butyl-1,1,4,4-tetramethylbut-2-in-1,4-ylendiperoxid, und weiterhin Vernetzungshilfsmittel wie Triallylisocyanurat.

In verschiedenen Ausführungsformen handelt es sich bei dem Vulkanisationssystem um ein Peroxid-basiertes Vulkanisationssystem. In entsprechenden Ausführungsformen ist die mindestens eine Peroxid-Verbindung, enthaltend in einer erfindungsgemäßen Zusammensetzung, vorzugsweise ausgewählt aus der Gruppe bestehend aus Dibenzoylperoxid, tert-Butylperoxybenzoat, und insbesondere 1,1-Di-(tert-butylperoxy)-3,3,5-trimethylcyclohexan, Butyl-4,4-di-(tert-butylperoxy)valerat, Dicumylperoxid, Di-(2-tert.-butyl-peroxyisopropyl)-benzen, tert-Butylcumylperoxid, 2,5-Dimethyl-2,5-di-(tert-butylperoxy)-hexan, Di-tert-butylperoxid, 3,3,5,7,7,-Pentamethyl-1,2,4,trioxepan, tert-Butylperoxy-2-ethylhexylcarbonat, Di(4-methylbenzoyl)peroxid, Di(2,4-dichlorobenzoyl)peroxid, 2,5-Dimethyl-2,5-di(tert-butylperoxyl)hexan und Di-tert-butyl-1,1,4,4-tetramethylbut-2-in-1,4-ylendiperoxid.

In einigen Ausführungsformen beträgt die Menge an Peroxidverbindung ungefähr 0,1 Gew.-% bis ungefähr 7 Gew.-%, beispielsweise ungefähr 0,1, 0,2, 0,3, 0,4, 0,5, 0,6, 0,7, 0,8, 0,9, 1,0, 1,5, 2,0, 2,5, 3,0, 3,5, 4,0, 4,5, 5,0, 5,5, 6,0, 6,5 oder 7,0 Gew.-%, vorzugsweise ungefähr 0,1 Gew.-% bis ungefähr 5 Gew., beispielsweise ungefähr 0,15, 0,25, 0,35, 0,45, 0,55, 0,65, 0,75, 0,85, 0,95, 1,05, 1,1, 1,2, 1,4, 1,7, 1,9, 2,1, 2,4, 2,6, 2,8, 3,3, 3,7, 4,1, 4,6, 4,9 oder 5,0 Gew.-%, jeweils bezogen auf das Gesamtgewicht der Zusammensetzung

In verschiedenen Ausführungsformen ist das Vulkanisationssystem ein Peroxid-basiertes Vulkanisationssystem und die erfindungsgemäße Zusammensetzung enthält mindestens eine Peroxidverbindung in einer Menge von ungefähr 0,1 Gew.-% bis ungefähr 7 Gew.-%, vorzugsweise ungefähr 0,1 Gew.-% bis ungefähr 5 Gew.-%, jeweils bezogen auf das Gesamtgewicht der Zusammensetzung.

Anstelle von Peroxiden können auch "disulfidische" Vulkanisationssysteme, also Vulkanisationssysteme auf Basis von Disulfiden eingesetzt werden. Geeignet sind beispielsweise Thiuramdisulfide. Die Einsatzmengen im Falle von Disulfiden betragen vorzugsweise 0,2 - 5 Gew.-%.

Als weitere Alternative können als Vulkanisationssystem
b3) Chinone, Chinondioxime, insbesondere p-Benzochinondioxim, Nitrosobenzol oder Dinitrosobenzol, insbesondere p-Dinitrosobenzol,
verwendet werden. Auch diese sind aus der Vulkanisation von Kautschuk bekannt.

Erfindungsgemäß kann auch ein kombiniertes Vulkanisationssystem aus elementarem Schwefel, den oben genannten organischen Beschleunigern und Chinondioximen eingesetzt werden. Beispielhaft erwähnt sei p-Benzochinondioxim. Es können jedoch auch andere Chinondioxime in Kombination mit den vorgenannten Schwefelsystemen verwendet werden. Das Vulkanisationssystem kann auch nur aus Chinondioximen bestehen. Die Einsatzmenge beträgt vorzugsweise 0,2 - 6,0 Gew.-%, noch bevorzugter 1,5 - 6,0 Gew.-%, insbesondere für Chinondioxime, unabhängig davon, ob diese zusammen mit Schwefel eingesetzt werden oder nicht.

In verschiedenen Ausführungsformen ist das mindestens eine Vulkanisationssystem entsprechend ausgewählt aus der Gruppe bestehend Schwefel und einem oder mehreren Beschleunigern; ein oder mehreren Peroxiden, vorzugsweise organischen Peroxiden; disulfidischen Vulkanisationssystemen; und Chinonen, Chinondioximen, Nitrosobenzol und/oder Dinitrosobenzol.

Ein weiterer erfindungsgemäß wesentlicher Bestandteil ist mindestens eine Pigmentkomponente ausgewählt aus der Gruppe von Korrosionsschutzpigmenten. Der Begriff Korrosionsschutzpigment", wie im Kontext der vorliegenden Erfindung verwendet, bezieht sich auf verschiedene Arten von Pigmenten, wie sie üblicherweise in beispielsweise Farben, Lacken und/oder (metallischen) Beschichtungen zwecks Optimierung des Korrosionsschutzes Verwendung finden. In verschiedenen Ausführungsformen handelt es sich bei dem mindestens einen Korrosionsschutzpigment einer erfindungsgemäßen Zusammensetzung um ein Metallphosphatsalz. In weiteren derartigen Ausführungsformen handelt es sich bei dem mindestens einen Metallphosphatsalz um ein Metallorthophosphatsalz, ein Metalltriphosphatsalz oder um ein Metallpolyphosphatsalz. Im Kontext der vorliegenden Erfindung schließt der Begriff "Metallphosphatsalz" auch die Hydrate entsprechender Salze ein. In verschiedenen Ausführungsformen umfasst das mindestens eine Metallphosphatsalz mindestens ein Metallkation ausgewählt aus der Gruppe von Alkalimetallkationen, Erdalkalimetallkationen, Übergangsmetallkationen und metallischen Kationen der Borgruppe. In bevorzugten Ausführungsformen ist das mindestens eine Metallkation ein Kation eines Metalls ausgewählt aus der Gruppe bestehend aus Zn, AI, Ca, Sr, Mo, Ba und Pb, vorzugsweise aus der Gruppe bestehend aus Zn, AI, Ca, Sr und Mo. In verschiedenen Ausführungsformen enthält das mindestens eine Metallphosphatsalz mindestens zwei verschiedene Metallkationen, wie voranstehend definiert.

Als nicht-einschränkende Beispiele für im Kontext der vorliegenden Erfindung geeignete Korrosionsschutzpigmente, vorzugsweise Metallphosphatsalze, seien Aluminiumpolyphosphat-Verbindungen, Zinkaluminiumorthophosphat, Zinkorthophosphathydrat, Zinkmolybdenorthophosphathydrat, Calciumphosphatkomplexe, Zinkaluminiumpolyphosphathydrat, Strontiumaluminiumpolyphosphathydrat und Aluminiumtriphosphat genannt. Entsprechend ist das mindestens eine Korrosionsschutzpigment in verschiedenen Ausführungsformen ausgewählt aus der Gruppe bestehend aus Aluminiumpolyphosphat-Verbindungen, Zinkaluminiumorthophosphat, Zinkorthophosphathydrat, Zinkmolybdenorthophosphathydrat, Calciumphosphatkomplexen, Zinkaluminiumpolyphosphathydrat, Strontiumaluminiumpolyphosphathydrat und Aluminiumtriphosphat.

In einigen Ausführungsformen beträgt die Menge des mindestens einen Korrosionsschutzpigmentes ungefähr 0,1 bis ungefähr 10 Gew.-%, beispielsweise ungefähr 0,1, 0,2, 0,3, 0,4, 0,5, 0,6, 0,7, 0,8, 0,9, 1,0, 1,5, 2,0, 2,5, 3,0, 3,5, 4,0, 5,0, 6,0, 7,0, 8,5, 9,0, 9,5 oder 10,0 Gew.-%, vorzugsweise ungefähr 3,0 bis ungefähr 8,0 Gew.-%, beispielsweise ungefähr 3,0, 3,1, 3,2, 3,3, 3,4 3,5, 3,6, 3,7, 3,8, 3,9, 4,0 4,1, 4,2, 4,6, 5,2, 5,5, 6,2, 6,5, 7,2, 7,5, oder 8,0 Gew.-%, jeweils bezogen auf das Gesamtgewicht der Zusammensetzung.

Des Weiteren können erfindungsgemäße heißhärtende, reaktive Zusammensetzungen mindestens ein Vernetzungsmittel enthaltend multiple (Meth)Acryloyl-Gruppen enthalten. Derartige Vernetzungsmittel können eingesetzt werden, um die Zugfestigkeit des Materials zu erhöhen.

Vernetzungsmittel mit multiplen (Meth)Acryloyl-Gruppen sind im Stand der Technik bekannt und können, beispilesweise und ohne Einschränkung, ausgewählt werden aus Di(meth)acrylaten, Tri(meth)acrylaten, Tetra(meth)acrylaten und Penta(meth)acrylaten und dergleichen. Derartige Vernetzungsmittel können z.B. durch Reaktion von (Meth)acrylsäure mit einem mehrwertigen Alkohol (d.h. einem Alkohol mit mindestens zwei Hydroxylgruppen) gebildet werden. Der mehrwertige Alkohol hat oft zwei, drei, vier oder fünf Hydroxylgruppen. Prinzipiell können auch Mischungen von Vernetzungsmitteln verwendet werden.

In verschiedenen Ausführungsformen enthalten die Vernetzungsmittel mindestens zwei (Meth)Acryloylgruppen. Beispielhafte Vernetzungsmittel mit zwei Acryloylgruppen sind unter anderem 1,2-Ethandioldiacrylat, 1,3-Propandioldiacrylat, 1,9-Nonandioldiacrylat, 1,12-Dodecandioldiacrylat, 1,4-Butandioldiacrylat, 1,6-Hexandioldiacrylat, Butylenglykoldiacrylat, Bisphenol-A-Diacrylat, Diethylenglykoldiacrylat, Triethylenglykoldiacrylat, Tetraethylenglykoldiacrylat, Tripropylenglykoldiacrylat, Polyethylenglykoldiacrylat, Polypropylenglykoldiacrylat, Polyethylen/Polypropylen-Copolymerdiacrylat, Polybutadiendi(meth)acrylat, propoxyliertes Glycerintri(meth)acrylat und mit Neopentylglykolhydroxypivalatdiacrylat modifiziertes Caprolacton.

Zu den beispielhaften Vernetzungsmitteln mit drei oder vier (Meth)acryloylgruppen gehören u.a. Trimethylolpropantriacrylat (z.B. kommerziell erhältlich unter der Handelsbezeichnung TMPTA-N von Cytec Industries, Inc., Smyrna, GA und unter der Handelsbezeichnung SR-351 von Sartomer, Exton, PA), Trimethylolpropantrimethacrylat (z.B. im Handel erhältlich unter der Handelsbezeichnung SR-350 von Sartomer, Exton, PA), Pentaerythritoltriacrylat (z.B. im Handel erhältlich unter der Handelsbezeichnung SR-444 von Sartomer), Tris(2-hydroxyethylisocyanurat)triacrylat (z.B. im Handel erhältlich unter der Handelsbezeichnung SR-368 von Sartomer), eine Mischung aus Pentaerythritoltriacrylat und Pentaerythritoltetraacrylat (z.B, kommerziell erhältlich von Cytec Industries, Inc. unter der Handelsbezeichnung PETIA mit einem Verhältnis von Tetraacrylat zu Triacrylat von ungefähr 1:1 und unter der Handelsbezeichnung PETA-K mit einem Verhältnis von Tetraacrylat zu Triacrylat von ungefähr 3:1), Pentaerythritol-Tetraacrylat (z.B. kommerziell erhältlich unter der Handelsbezeichnung SR-295 von Sartomer), Di-trimethylolpropantetraacrylat (z.B. kommerziell erhältlich unter der Handelsbezeichnung SR-355 von Sartomer) und ethoxyliertes Pentaerythritoltetraacrylat (z.B. kommerziell erhältlich unter der Handelsbezeichnung SR-494 von Sartomer).

Ein beispielhaftes Vernetzungsmittel mit fünf (Meth)Acryloylgruppen ist Dipentaerythritolpentaacrylat (z.B. kommerziell erhältlich unter der Handelsbezeichnung SR-399 von Sartomer).

Die Einsatzmenge derartiger Vernetzungsmittel liegt üblicherweise im Bereich von ungefähr 0,1 bis ungefähr 5 Gew.-%. In einigen Ausführungsformen ist das mindestens eine Vernetzungsmittel enthaltend (Meth)Acryloyl-Gruppen, wie voranstehend definiert, in einer Menge von ungefähr 0,1 Gew.-% bis ungefähr 5 Gew.-%, beispielsweise in einer Menge von ungefähr 0,1, 0,2, 0,3, 0,4, 0,5, 0,6, 0,7, 0,8, 0,9, 1,0, 1,5, 2,0, 2,5, 3,0, 3,5, 4,0, 4,5 oder 5,0 Gew.-%, vorzugsweise ungefähr 0,1 Gew.-% bis ungefähr 2 Gew.-%, beispielsweise ungefähr 0,15, 0,25, 0,35, 0,45, 0,55, 0,65, 0,75, 0,85, 0,95, 1,05, 1,1, 1,2, 1,3, 1,4, 1,5, 1,6, 1,7, 1,8, 1,9, 2,0, 2,1, 2,2, 2,3, 3,4 2,5, 2,6, 2,7, 2,8, 2,9 oder 3,0 Gew.-%, jeweils bezogen auf das Gesamtgewicht der Zusammensetzung, enthalten.

Zusätzlich können die erfindungsgemäßen Zusammensetzungen für Kautschukmischungen übliche Füllstoffe, Beschleuniger, weitere Vernetzungsmittel, Antioxidantien, Co-Aktivatoren und weitere Katalysatoren, Russe, Treibmittel, Öle, Alterungsschutzmittel, Fasern ggf. auch Graphit, Rheologiehilfsmittel, Haftungsvermittler, Pigmente und thermoplastische Polymere enthalten.

In verschiedenen Ausführungsformen enthält eine erfindungsgemäße Zusammensetzung mindestens einen weiteren Bestandteil ausgewählt aus Füllstoffen, Rheologiehilfsmitteln, Extenderölen, Treibmitteln, weiteren Pigmenten, Haftvermittlern und/oder Alterungsschutzmitteln.

Die erfindungsgemäßen Zusammensetzungen können weiterhin feinverteilte thermoplastische Polymerpulver enthalten. Diese sollten eine Glasübergangstemperatur im Bereich zwischen -80 °C und 50 °C aufweisen. Beispiele für geeignete thermoplastische Polymere sind Polypropylen, Polyethylen, thermoplastische Polyurethane, (Meth)acrylatcopolymere, Styrolcopolymere, Polyvinylchlorid, Polyvinylacetal sowie Polyvinylacetat und dessen Copolymere, insbesondere Ethylenvinylacetat (EVA). Obwohl die Teilchengröße bzw. Teilchengrößenverteilung des thermoplastischen Polymerpulvers nicht besonders kritisch ist, sollte die mittlere Teilchengröße unter 1 mm, vorzugsweise unter 350 µm, besonders bevorzugt zwischen 100 und 20 µm liegen. Wenn thermoplastische Polymerpulver mitverwendet werden, liegt ihr Anteil an der Gesamtformulierung zwischen 1 und 20 Gew.-%, vorzugsweise zwischen 5 und 15 Gew.-%.

Die Füllstoffe können aus einer Vielzahl von Materialien ausgewählt werden, insbesondere sind hier zu nennen Kreiden, natürliche oder gemahlene Calciumcarbonate, Calcium-Magnesiumcarbonate, Silikate, Talkum, Schwerspat sowie Russ. Es kann ggf. zweckmäßig sein, dass zumindest ein Teil der Füllstoffe oberflächenvorbehandelt ist, insbesondere hat sich bei den verschiedenen Calciumcarbonaten bzw. Kreiden eine Beschichtung mit Stearinsäure zur Verminderung der eingetragenen Feuchtigkeit und zur Verminderung der Feuchtigkeitsempfindlichkeit der ausgehärteten Zusammensetzung als zweckmäßig erwiesen. Die erfindungsgemäßen Zusammensetzungen können noch zwischen 0 und 8 Gew.-%, vorzugsweise zwischen 1 und 6 Gew.-% an Calciumoxid enthalten. Der Gesamtanteil an Füllstoffen in der Formulierung kann zwischen 10 und 80 Gew.-% variieren, der Vorzugsbereich liegt zwischen 20 und 65 Gew.-%.

Gegen den thermischen, thermooxidativen oder Ozon-Abbau der erfindungsgemäßen Zusammensetzungen können konventionelle Stabilisatoren oder Alterungsschutzmittel, wie z.B. sterisch gehinderte Phenole (beispielsweise 2,2- Methylen-bis-(4-methyl-6-tert.-butylphenol)) oder Aminderivate eingesetzt werden, typische Mengenbereiche fürdiese Stabilisatoren sind 0 bis 2 Gew.-%.

Obwohl die Rheologie der erfindungsgemäßen Zusammensetzungen auch durch die Auswahl der Füllstoffe und das Mengenverhältnis der niedermolekularen Flüssigkautschuke in den gewünschten Bereich gebracht werden kann, können konventionelle Rheologiehilfsmittel wie z.B. pyrogene Kieselsäuren, Bentone oder fibrillierte oder Pulp-Kurzfasern im Bereich zwischen 0,1 und 7 % oder auch hydrierte Ricinusöl-Derivate - bekannt z.B. unter dem Handelsnamen Rilanit (Fa. Cognis) - zugesetzt werden. Außerdem können weitere konventionelle Hilfs- und Zusatzmittel in den erfindungsgemäßen Zusammensetzungen Verwendung finden.

Zum Erzielen der Aufschäumung während des Härtungsvorganges können prinzipiell alle gängigen Treibmittel verwendet werden, vorzugsweise jedoch organische Treibmittel aus der Klasse der Azoverbindungen, N-Nitrosoverbindungen, Sulfonylhydrazide oder Sulfonylsemicarbazide. Für die erfindungsgemäß zu verwendenden Azoverbindungen seien beispielhaft das Azobisisobutyronitril und insbesondere das Azodicarbonamid genannt, aus der Klasse der Nitrosoverbindungen sei beispielhaft das Di-Nitrosopentamethylentetramin genannt, aus der Klasse der Sulfohydrazide das 4,4'-Oxybis(benzolsulfonsäurehydrazid), das Diphenylsulfon-3,3'-disulfohydrazid oder das Benzol-1 ,3-disulfohydrazid und aus der Klasse der Semicarbazide das p-Toluolsulfonylsemicarbazid genannt.

An die Stelle der vorgenannten Treibmittel können auch die so genannten expandierbaren Mikrohohlkugeln ("expandable microspheres"), d.h. nicht expandierte thermoplastische Polymerpulver treten, die mit niedrigsiedenden organischen Flüssigkeiten getränkt bzw. gefüllt sind. Derartige "Microspheres" sind beispielsweise in der EP-A-559254, der EP-A-586541 oder der EP-A-594598 beschrieben. Obwohl nicht bevorzugt, können auch bereits expandierte Mikrohohlkugeln verwendet bzw. mitverwendet werden. Gegebenenfalls können diese expandierbaren/expandierten Mikrohohlkugeln in beliebigem Mengenverhältnis mit den oben genannten "chemischen" Treibmitteln kombiniert werden. Die chemischen Treibmittel werden in schäumbaren Zusammensetzungen in Mengen zwischen 0,1 und 3 Gew.-%, vorzugsweise zwischen 0,2 und 2 Gew.-%, die Mikrohohlkugeln zwischen 0,1 und 4 Gew.-%, vorzugsweise zwischen 0,2 und 2 Gew.-% verwendet.

Obwohl die erfindungsgemäßen Zusammensetzungen aufgrund des bevorzugten Gehaltes an Flüssigkautschuk mit funktionellen Gruppen in der Regel bereits eine sehr gute Haftung auf den Substraten haben, können, falls erforderlich, Klebrigmacher und/oder Haftvermittler zugesetzt werden. Hierzu eignen sich beispielsweise Kohlenwasserstoffharze, Phenolharze, Terpen-Phenolharze, Resorcinharze oder deren Derivate, modifizierte oder unmodifizierte Harzsäuren bzw. -ester (Abietinsäurederivate), Polyamine, Polyaminoamide, Anhydride und Anhydrid enthaltende Copolymere. Auch der Zusatz von Polyepoxydharzen in geringen Mengen kann bei manchen Substraten die Haftung verbessern. Hierfür werden dann jedoch vorzugsweise die festen Epoxidharze mit einem Molekulargewicht von über 700 in fein gemahlener Form eingesetzt. Falls Klebrigmacher bzw. Haftvermittler eingesetzt werden, hängt deren Art und Menge von der Polymerzusammensetzung sowie dem Substrat, auf welches die Zusammensetzung appliziert wird, ab. Typische klebrigmachende Harze (Tackifier) wie z.B. Terpenphenolharze oder Harzsäurederivate werden in Konzentrationen zwischen 5 und 20 Gew.-% verwendet, typische Haftvermittler wie Polyamine, Polyaminoamide oder Phenolharze oder Resorcinderivate werden im Bereich zwischen 0,1 und 10 Gew.-% verwendet.

In verschiedenen Ausführungsformen sind die erfindungsgemäßen Zusammensetzungen frei von Weichmachern und Extenderölen. Es kann jedoch notwendig sein, die Rheologie der ungehärteten Zusammensetzung und/oder die mechanischen Eigenschaften der gehärteten Zusammensetzung durch Zugabe von sog. Extenderölen, d.h. aliphatischen, aromatischen oder naphtenischen Ölen zu beeinflussen. Vorzugsweise geschieht diese Beeinflussung zwar durch zweckmäßige Auswahl der niedrigmolekularen Flüssigkautschuke oder durch die Mitverwendung von niedermolekularen Polybutenen oder Polyisobutylenen. Falls Extenderöle eingesetzt werden, werden Mengen im Bereich zwischen 2 und 15 Gew.-% verwendet.

Zur Erzielung korrosionsbeständiger Kautschukmischungen enthalten die erfindungsgemäßen Zusammensetzungen vorzugsweise (Angabe in Gew.-%):

**Tabelle 1**

| **Komponente** | **allgemeine Zusammensetzung** | **bevorzugte Zusammensetzung** | **besonders bevorzugte Zusammensetzung** |
|---|---|---|---|
| Festkautschuk | 0 - 12 % | 0,1 - 9 % | 1,5 - 6,5 % |
| Polybutadien, Maleinsäureanhydrid-gepfropft | 1 - 20 % | 2 - 10% | 2,5 - 8% |
| Polybutadien flüssig, cis 1,4-Anteil > 80% | 2 - 50 % | 4 - 45 % | 5 - 35 % |
| Polybutadien flüssig 1,2 Vinylanteil > 50 % (bis zu 80%) | 0-10% | 0-8% | 0-6% |
| Weichmacher | 0 - 40 % | 2 - 30 % | 5 - 25 % |
| Kohlenwasserstoffharz | 0 - 40 % | 2 - 30 % | 5 - 25 % |
| Vulkanisationsmittel (bspw. Peroxid-Verbindung(en) | 0,1 - 7 % | 0,2 - 5,0 % | 0,5 - 3,0 % |
| Vulkanisationsbeschleuniger | 0,25 - 8 % | 0,5 - 5 % | 0,8 - 4 % |
| Bifunktionaler Vulkanisationsvernetzer | 0 - 2 % | 0 - 1 % | 0,25 - 1 % |
| Vernetzer enthaltend multiple (Meth)Acryloyl-Gruppen | 0,1 - 5 % | 0,1 - 2 % | 0,5 - 2 % |
| Korrosionsschutzpigment | 0,1 - 10 % | 1 - 8 % | 2 - 6 % |
| Chemisches Treibmittel (inkl. Aktivator) | 0 - 6% | 0,2 - 4% | 0,5 - 3% |
| Physikalisches Treibmittel | 0 - 6 % | 0 - 4 % | 0 - 1,5 % |
| Zinkoxid | 0 - 10 % | 0 - 8 % | 0,5 - 7 % |
| Antioxidans (z.B. 2,2,-Methylenbis-(4-methyl-tert-butylphenol) | 0 - 1,5 % | 0,1 - 1,0 % | 0,2 - 0,7 % |
| Calciumoxid | 0 - 8 % | 1 - 6 % | 2,5 - 5,5 % |
| Ruß | 0 - 5 % | 0,1 - 3 % | 0,2 - 2% |
| Füllstoff (Calciumcarbonat, Graphit, Talkum, Glimmer, etc.) | 10 - 45 % | 15 - 45 % | 25 - 40 % |
| Calciumcarbonat, beschichtet | 0 - 30 % | 0 - 18 % | 0 - 12% |

Daneben können, wie vorstehend genannt, weitere Füllstoffe wie Fasern, Silikate, Tonerden, weitere typische Beschleuniger, andere Antioxidantien, Co-Aktivatoren und weitere Katalysatoren, Treibmittel, Öle, Alterungsschutzmittel mitverwendet werden. Ggf. können auch Rheologiehilfsmittel, Haftungsvermittler, weitere Pigmente und thermoplastische Polymere (SEPS, SEEPS, PE, PP, PVC, TPU) in der Zusammensetzung enthalten sein. Die Summe der Bestandteile der Zusammensetzung ergänzt sich in jedem Falle zu 100 %.

Die erfindungsgemäßen heißhärtenden, reaktiven, einkomponentigen Klebstoffe können wie die bisher bekannten Klebstoffe auf Kautschukbasis im Rohbau eingesetzt werden, beispielsweise für Bördelnahtverklebungen oder überlappende Verklebungen. Sie können auf geölte Bleche, wie sie im Automobilrohbau eingesetzt werden, aufgetragen werden und die Bauteile werden anschließend gefügt. Die erfindungsgemäßen Zusammensetzungen benötigen in der Regel keine Vorhärtungsmechanismen wie Induktionsheizung, Rohbauöfen oder IR-Strahler zur Vorhärtung, da sie wie die bisher bekannten Kautschukzusammensetzungen wäscherbeständig sind. Gegenüber den bisher bekannten Kautschukzusammensetzungen weisen sie eine sehr viel höhere Korrosionsbeständigkeit auf. Diese Eigenschaft ist erwünscht, damit die strukturell geklebten Bauteile den modernen Anforderungen im Fahrzeugbau entsprechen. Weil die erfindungsgemäßen Zusammensetzungen ohne teure Spezialpolymere oder Copolymere formuliert werden können, lassen sich diese besonders kostengünstig fertigen.

Die erfindungsgemäßen Zusammensetzungen können in sich bekannter Weise in Mischaggregaten mit hoher Scherwirkung hergestellt werden, hierzu gehören z.B. Kneter, Planetenmischer, Innenmischer, so genannte "Banbury-Mischer" und ähnliche dem Fachmann bekannte Mischaggregate.

Anwendung finden die Zusammensetzungen insbesondere als Unterfütterung sowie als Kleb- und Dichtstoff für Anbauteile wie Türen, Front- und Heckklappe, Dach-, Front- und Bodenbereich, aber auch direkt in der Fahrgastzelle für Fahrzeuge (Automobile, LKW, Bus) oder für die Fertigung von Schienenfahrzeugen. Sie können auch im Gerätebau verwendet werden. Daher umfasst die vorliegende Erfindung auch die Verwendung einer erfindungsgemäßen Zusammensetzung als korrosionsbeständiges Material im Fahrzeug- oder Gerätebau. Insbesondere findet die heißhärtende, reaktive Zusammensetzung, wie hierin offenbart und beschrieben, Verwendung als einkomponentiger Klebstoff, Dichtstoff oder als Beschichtungsmasse im Automobilrohbau.

Es ist im Übrigen selbstverständlich, dass alle Ausführungsformen, die oben im Zusammenhang mit den beschriebenen Zusammensetzungen offenbart wurden, auch genauso in den beschriebenen Verwendungen und den entsprechend gehärteten Zusammensetzungen anwendbar sind und umgekehrt.

Entsprechend betrifft die vorliegende Erfindung, in einem weiteren Aspekt, auch die Verwendung mindestens eines Korrosionsschutzpigmentes zur Verbesserung des Korrosionsschutzes einer heißhärtenden, reaktiven Zusammensetzung auf der Basis von natürlichen und/oder synthetischen, olefinische Doppelbindungen enthaltenden Elastomeren und enthaltend des Weiteren mindestens ein Vulkanisationssystem, wie vorangehend beschrieben, wobei alle Ausführungsformen, die oben im Zusammenhang mit den beschriebenen Zusammensetzungen offenbart wurden, entsprechend auch auf die Verwendung der beschriebenen Korrosionsschutzpigmente anwendbar sind.

In den nachfolgenden Ausführungsbeispielen soll die Erfindung näher erläutert werden, wobei die Auswahl der Beispiele keine Beschränkung des Umfanges des Erfindungsgegenstandes darstellen soll.

### Beispiele

**Tabelle 2**

| **Inhaltsstoffe** | **Beispiel 1** | **Beispiel 2** | **Beispiel 3** | **Beispiel 4** |
|---|---|---|---|---|
| Festes Polybutadien; cis-1,4-Anteil >95% | 5,90 | 4,50 | 5,90 | 4,00 |
| Maleinsäureanhydrid-gepropf. Polybutadien | 4,80 | 6,00 | 6,00 | 4,00 |
| Flüssiges Polybutadien; cis-1,4-Anteil >80% | 16,25 | 20,50 | 18,00 | 12,25 |
| Talkum | 17,58 | | | |
| Calciumcarbonat | 16,42 | 38,37 | 34,50 | 42,15 |
| Beschichtetes Calciumcarbonat | 17,20 | 17,60 | 17,20 | 17,20 |
| Calciumdioxid | 4,80 | 4,78 | 4,80 | 4,80 |
| Mineralöl | 6,25 | | | 10,25 |
| Antioxidant | 0,30 | 0,40 | 0,30 | 0,05 |
| Amorpher Ruß | 0,30 | 0,20 | 0,30 | 0,30 |
| Expandierende Mikrohohlkugeln | 0,10 | 0,15 | | 0,60 |
| Benzolsulfinsäure Zinksalz | | | 0,10 | |
| Azodicarbonamid | | | 1,00 | |
| Aluminiumtriphosphat | 5,00 | 5,00 | 4,00 | 2,00 |
| Aromatisches Kohlenwasserstoffharz in Öl | 2,00 | | 5,00 | |
| Kieselsäure, hydrophob | | 0,50 | | |
| Flüssiges Polybutadien, 1,2 Vinylanteil > 50% | | | 1,00 | |
| Peroxid | 1,40 | 1,00 | 1,40 | 1,40 |
| Acrylat Monomer Co-Agent | 1,70 | 1,00 | 0,50 | 1,00 |

**Tabelle 3**

| | | | | |
|---|---|---|---|---|
| **Inhaltsstoffe** | **Beispiel 5** | **Beispiel 6** | **Beispiel 7** | **Beispiel 8** |
| Festes Polybutadien; cis-1,4-Anteil >95% | 5,00 | 7,8 | 6,1 | 6,00 |
| Maleinsäureanhydrid-gepropf. Polybutadien | 4,00 | 4,3 | 6,1 | 6,0 |
| Flüssiges Polybutadien; cis-1,4-Anteil >80% | 18,14 | 24,48 | 6,1 | 22,4 |
| Talkum | | | | |
| Calciumcarbonat | 44,27 | 32,81 | 26,8 | 25,95 |
| Beschichtetes Calciumcarbonat | 12,04 | 18,7 | 20,4 | 13,2 |
| Calciumdioxid | 2,9 | 2,5 | 2,55 | 8,00 |
| Mineralöl | 5,00 | | 20,47 | |
| Antioxidant | 0,30 | 0,3 | 0,50 | 0,50 |
| Amorpher Ruß | 0,37 | 0,3 | 2,0 | 0,50 |
| Expandierende Mikrohohlkugeln | 0,22 | 0,62 | 1,02 | 0,2 |
| Benzolsulfinsäure Zinksalz | | 0,1 | 0,17 | |
| Azodicarbonamid | | 0,8 | 1,53 | |
| Aluminiumtriphosphat | 1,16 | 1,19 | 3,24 | 6,40 |
| Aromatisches Kohlenwasserstoffharz in Öl | | | | |
| Kieselsäure, hydrophob | | | | |
| Flüssiges Polybutadien; 1,2 Vinylanteil > 50% | | 2,2 | | |
| Schwefel | 3,50 | 2,5 | 1,02 | 3,75 |
| Organischer Beschleuniger | 3,00 | 1,1 | 1,2 | 5,00 |
| Acrylat Monomer Co-Agent | 0,1 | 0,3 | 0,8 | 2,1 |

**Tabelle 4**

| **Inhaltsstoffe** | **Beispiel 9** | **Beispiel 10** |
|---|---|---|
| Festes Polybutadien; cis-1,4-Anteil >95% | 5,00 | 6,35 |
| Maleinsäureanhydrid-gepropf. Polybutadien | 1,73 | 1,2 |
| Flüssiges Polybutadien; cis-1,4-Anteil >80% | 5,0 | 24,1 |
| Talkum | | |
| Calciumcarbonat | 49,2 | 40,53 |
| Beschichtetes Calciumcarbonat | 12,0 | 11,9 |
| Calciumdioxid | 2,5 | 2,0 |
| Mineralöl | 20,00 | |
| Antioxidant | 0,5 | 0,1 |
| Amorpher Ruß | 2,00 | 0,3 |
| Expandierende Mikrohohlkugeln | 0,23 | |
| Benzolsulfinsäure Zinksalz | 0,1 | |
| Azodicarbonamid | 0,3 | |
| Di-Nitrosopentamethylentetramin | | 0,2 |
| Aluminiumtriphosphat | 0,65 | 3 |
| Aromatisches Kohlenwasserstoffharz in Öl | | |
| Kieselsäure, hydrophob | | 9,23 |
| Flüssiges Polybutadien; 1,2 Vinylanteil > 50% | | |
| Benzochinondioxim | 0,39 | 0,99 |
| Acrylat Monomer Co-Agent | 0,4 | 0,1 |

Alle Mengenangaben obig aufgelisteter Inhaltstoffe sind in Gew.-%.

## Patentansprüche

1. Heißhärtende, reaktive Zusammensetzung auf der Basis von natürlichen und/oder synthetischen, olefinische Doppelbindungen enthaltenden Elastomeren und enthaltend des Weiteren mindestens ein Vulkanisationssystem, **dadurch gekennzeichnet, dass** sie mindestens ein Korrosionsschutzpigment umfasst.

2. Die heißhärtende, reaktive Zusammensetzung nach Anspruch 1, **dadurch gekennzeichnet, dass** das mindestens eine Korrosionsschutzpigment ein Metallphosphatsalz ist.

3. Die heißhärtende, reaktive Zusammensetzung nach Anspruch 1 oder Anspruch 2, **dadurch gekennzeichnet, dass**
- es sich bei dem mindestens einen Metallphosphatsalz um ein Metallorthophosphatsalz, ein Metalltriphosphatsalz oder um ein Metallpolyphosphatsalz handelt; und/oder
- das mindestens eine Metallphosphatsalz mindestens ein Metallkation ausgewählt aus der Gruppe von Alkalimetallkationen, Erdalkalimetallkationen, Übergangsmetallkationen und Kationen der Borgruppe umfasst.

4. Die heißhärtende, reaktive Zusammensetzung nach Anspruch 3, **dadurch gekennzeichnet, dass** das mindestens eine Metallkation ein Kation eines Metalls ausgewählt aus der Gruppe bestehend aus Zn, AI, Ca, Sr, Mo, Ba und Pb ist.

5. Die heißhärtende, reaktive Zusammensetzung nach mindestens einem der vorhergehenden Ansprüche, **dadurch gekennzeichnet, dass** das mindestens eine Korrosionsschutzpigment ausgewählt ist aus der Gruppe bestehend aus einer Aluminiumpolyphosphat-Verbindung, Zinkaluminiumorthophosphat, Zinkorthophosphathydrat, Zinkmolybdenorthophosphathydrat, einem Calciumphosphatkomplex, Zinkaluminiumpolyphosphathydrat, Strontiumaluminiumpolyphosphathydrat und Aluminiumtriphosphat.

6. Die heißhärtende, reaktive Zusammensetzung nach mindestens einem der vorhergehenden Ansprüche, **dadurch gekennzeichnet, dass** das mindestens eine Korrosionsschutzpigment in einer Menge von ungefähr 0,1 bis ungefähr 10 Gew.-%, vorzugsweise in einer Menge von ungefähr 3,0 bis ungefähr 8,0 Gew.-%, jeweils bezogen auf das Gesamtgewicht der Zusammensetzung, enthalten ist.

7. Die heißhärtende, reaktive Zusammensetzung nach mindestens einem der vorhergehenden Ansprüche, **dadurch gekennzeichnet, dass** sie mindestens ein flüssiges Polyen ausgewählt aus der Gruppe bestehend aus Polybutadienen, Polybutenen, Polyisobutylenen, 1,4- und 3,4-Polyisoprenen, Styrol-Butadien-Copolymeren und Butadien-Acrylnitril-Copolymeren, vorzugsweise cis-1,4-Polybutadien, umfasst.

8. Die heißhärtende, reaktive Zusammensetzung nach mindestens einem der vorhergehenden Ansprüche, **dadurch gekennzeichnet, dass** sie mindestens einen Festkautschuk aus der Gruppe cis-1,4-Polybutadien, Styrol-Butadien-Kautschuk, synthetischer Isoprenkautschuk, Naturkautschuk, Ethylen-Propylen-Dien-Kautschuk (EPDM), Polycyclooctenamer, Nitrilkautschuk, Butylkautschuk, Acrylkautschuk oder Polychloropren umfasst.

9. Die heißhärtende, reaktive Zusammensetzung nach mindestens einem der vorhergehenden Ansprüche, **dadurch gekennzeichnet, dass** das Vulkanisationssystem ausgewählt ist aus der Gruppe bestehend Schwefel und einem oder mehreren Beschleunigern; ein oder mehreren Peroxiden, vorzugsweise organischen Peroxiden; disulfidischen Vulkanisationssystemen; und Chinonen, Chinondioximen, Nitrosobenzol und/oder Dinitrosobenzol.

10. Die heißhärtende, reaktive Zusammensetzung nach mindestens einem der vorhergehenden Ansprüche, **dadurch gekennzeichnet, dass** das Vulkanisationssystem ein Peroxid-basiertes Vulkanisationssystem ist und die Zusammensetzung mindestens eine Peroxidverbindung in einer Menge von ungefähr 0,1 Gew.-% bis ungefähr 7 Gew.-%, vorzugsweise ungefähr 0,1 Gew.-% bis ungefähr 5 Gew.-%, jeweils bezogen auf das Gesamtgewicht der Zusammensetzung, enthält.

11. Die heißhärtende, reaktive Zusammensetzung nach mindestens einem der vorhergehenden Ansprüche, **dadurch gekennzeichnet, dass** sie des Weiteren mindestens ein Vernetzungsmittel enthaltend multiple (Meth)Acryloyl-Gruppen umfasst.

12. Die heißhärtende, reaktive Zusammensetzung nach mindestens einem der vorhergehenden Ansprüche, **dadurch gekennzeichnet, dass** das mindestens eine Vernetzungsmittel enthaltend (Meth)Acryloyl-Gruppen in einer Menge von ungefähr 0,1 Gew.-% bis ungefähr 5 Gew.-%, vorzugsweise ungefähr 0,1 Gew.-% bis ungefähr 2 Gew.-%, jeweils bezogen auf das Gesamtgewicht der Zusammensetzung, enthalten ist.

13. Die heißhärtende, reaktive Zusammensetzung nach mindestens einem der vorhergehenden Ansprüche, **dadurch gekennzeichnet, dass** sie zusätzlich Füllstoffe, Rheologiehilfsmittel, Extenderöle, Treibmittel, Pigmente, Haftvermittler und/oder Alterungsschutzmittel enthält.

14. Verwendung der heißhärtenden, reaktiven Zusammensetzung nach mindestens einem der vorhergehenden Ansprüche als einkomponentiger Klebstoff, Dichtstoff oder Beschichtungsmasse im Automobilrohbau

15. Verwendung mindestens eines Korrosionsschutzpigmentes zur Verbesserung des Korrosionsschutzes einer heißhärtenden, reaktiven Zusammensetzung auf der Basis von natürlichen und/oder synthetischen, olefinische Doppelbindungen enthaltenden Elastomeren und enthaltend des Weiteren mindestens ein Vulkanisationssystem.
